# EUROPEAN PATENT APPLICATION

(11) **EP 2 413 634 A1**
(43) Date of publication of application: **01.02.2012**
(21) Application number: 11175372.9
(22) Date of filing: 26.07.2011
(51) Int. Cl.: H04W 40/22, H04L 12/56

(54) **Radio communication system, radio communication apparatus and radio communication method**

(30) Priority: 28.07.2010 JP 2010168777
(71) Applicant: Hitachi Ltd., Tokyo (JP)
(72) Inventor: Shimoyama, Kazuya, Tokyo 100-8220 (JP); Masuko, Hideaki, Tokyo 100-8220 (JP); Yamada, Tsutomu, Tokyo 100-8220 (JP); Matsumoto, Noritaka, Tokyo 100-8220 (JP); Endoh, Hiromichi, Tokyo 100-8220 (JP)
(74) Representative: Calderbank, Thomas Roger

(57) **Abstract**

In a radio communication system in which even when a communication fault occurs, the system can be recovered quickly from the communication fault to improve the real time property of communication, a plurality of communication routes each constituted by relay radio stations (103, 104, 107, 108) are used in communication between two different radio stations (102, 105) and communication frames having the same data field are sent via the plural routes to perform multiple multi-hop communication for parallel data communication. In the event that an interruption of communication is detected, a command for changing the communication route is sent to one of radio stations which relate to the occurrence of interruption and besides, by using the communication route not undergoing the interruption, a command for changing the communication route is transmitted to the other of the radio stations which relate to the occurrence of interruption.

## Description

The present invention relates to a radio communication system, a radio communication apparatus and a radio communication method and more particularly, to radiocommunication system, apparatus and method which are suitable for performing radio communication by way of radio repeaters.

In network technologies for use in supervision, control and the like, with the aim of flexibly complying with such work as reduction of cable layout costs or addition or change in constitution of equipments, radio communication technologies have been employed.

For example, in the industrial enterprise field of social infrastructure such as for electric power and traffic and FA (Factory Automation) and PA (Process Automation) as well in which a relatively long radio communication distance tends to be set up, a so-called multi-hop radio network communication technique of transmitting/receiving data in a multi-hop fashion by utilizing a radio station (RS) as a repeater during execution of communications has been noticed.

In the above technique based on radio communication, however, the communication is liable to become unstable and in the event of occurrence of an interruption of communication, another radio repeater, for instance, needs to be searched and so, much time is consumed to again set up a radio communication network.

For example, as described in JP-A-2001-237875, a technique has been conceived, according to which two multi-hop routes are prepared having a main multi-hop route for performing radio communications via a predetermined repeater and a detour multi-hop route for performing radio communications via a repeater different from the predetermined repeater.

The aforementioned prior art is, however, disadvantageous in that when a communication fault takes place in the main multi-hop route and thereafter, a communication fault occurs in succession even in the detour multi-hop route before the main multi-hop route is restored, the multi-hop radio communication is interrupted, giving rise to problems particularly in such a communication for control which is used in the industrial fields while thinking much of real time property necessary for completion of a communication process within a constant time.

Accordingly, it is a preferred aim of the present invention to provide radiocommunication system, apparatus and method which can keep continuing communications in opposition to a fault of communication occurred in a radio communication route.

According to this invention, when a communication abnormality takes place in one of a first radio communication route and a second radio communication route, command information for changing at least part of the radio communication routes is supplied from one of a first node and a second node which are disposed on opposite sides of a spot of the communication abnormality so that information concerning route change may be transmitted to the other of the first and second nodes by way of the other radio communication route and, on the basis of the information concerning route change, command information complying with the radio communication route change is supplied from the other of the first and second nodes.

According to the present invention, even in the event of the occurrence of a communication fault, a quick recovery from the communication fault can be achieved, thus making it possible to keep continuing the communication. Especially, the real time property of communication can be maintained.

In the drawings:
Fig. 1 is a diagram illustrating configuration of a multi-hop radio network according to an embodiment of the invention.
Fig. 2 is a block diagram showing internal construction of a radio station used in the multi-hop radio network in the embodiment of the invention.
Fig. 3 is a diagram showing a format of a communication frame used in the multi-hop radio network in the embodiment of the invention.
Fig. 4 is a diagram showing structure of a routing table used in the multi-hop radio network in the embodiment of the invention.
Fig. 5 is a diagram showing a flowchart of operation of a frame analyzer in a radio station used for the multi-hop radio network in the embodiment of the invention.
Fig. 6 is a diagram showing a flowchart of operation of a route controller in the radio station used for the multi-hop radio network in the embodiment of the invention.
Fig. 7 is a diagram showing structure of a reception management table used for the multi-hop radio network in the embodiment of the invention.
Fig. 8 is a diagram showing a flowchart of operation of a route interruption decider in the radio station used for the multi-hop radio network in the embodiment of the invention.
Fig. 9 is a diagram showing a flowchart of operation of a route restorer used for the multi-hop radio network in the embodiment of the invention, especially indicating an operational flow for switching the route in the event that the communication route of the multi-hop radio network in the embodiment of the invention is interrupted.
Fig. 10 is a diagram showing a flowchart of operation for switching the route when the communication route of the multi-hop radio network in the embodiment of the invention is interrupted.
Fig. 11 is a sequence diagram showing operation for switching the route when the communication route of the multi-hop radio network in the embodiment of the invention is interrupted.
Fig 12. is another sequence diagram showing operation for switching the route when the communication route of the multi-hop radio network in the embodiment of the invention is interrupted.
Fig. 13 is a diagram showing another flowchart of operation for switching the route when the communication route of the multi-hop radio network in the embodiment of the invention is interrupted.
Fig. 14 is still another sequence diagram showing operation for switching the route when the communication route of the multi-hop radio network in the embodiment of the invention is interrupted.
Fig. 15 is a diagram showing a format of a transfer request message used for the multi-hop radio network in the embodiment of the invention.

The best mode for carrying out the present invention will now be described in detail by making reference to the accompanying drawings as necessary.

### < Overall Configuration >

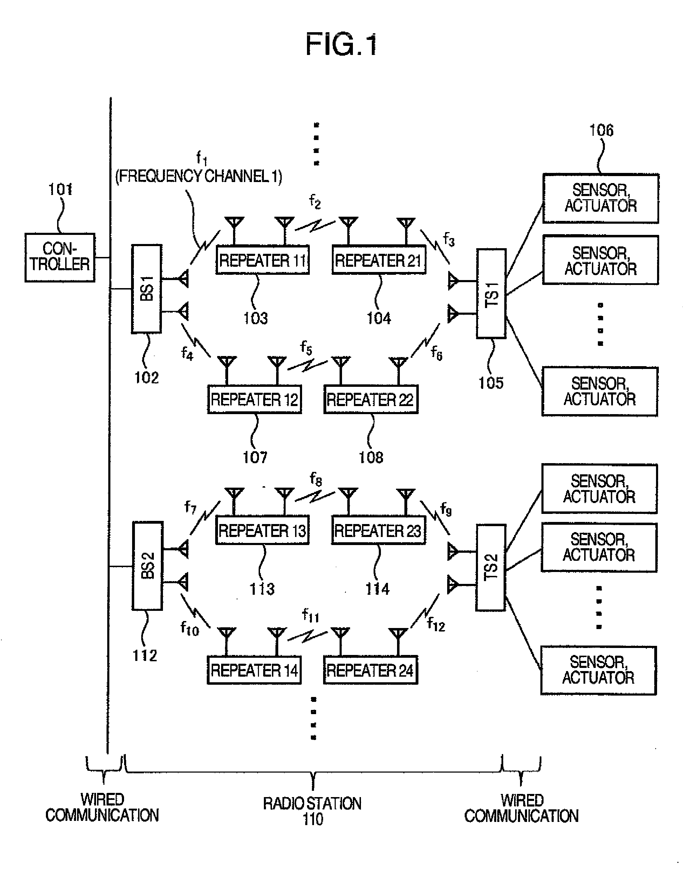

Referring first to Fig. 1, the configuration of a multi-hop radio network will be described. The network is used for supervision and control under the command of a controller adapted to control, by using a plurality of radio stations, the whole of the network of, for example, a plurality of field equipments existing within a constant range. The radio network can be materialized by making use of a radio communication technique used for radio LAN (Local Area Network) and radio PAN (Personal Area Network), for instance. In addition, a standardized sensor net technique such as Bluetooth or Zig Bee can be used.

As shown in Fig. 1, the network comprises a controller 101 for controlling radio stations (RS), a base station (BS) 1 (102) connected to the controller 101 by wire, field equipments 106 such as sensors and actuators, a terminal station (TS) 1 (105) connected to the field equipments 106 by wire, and repeater 11 (103), repeater 21 (104), repeater 12 (107) and repeater 22 (108) which are adapted to relay the base station 1 (102) to the terminal station 105 in a multi-hop fashion. The aforementioned wire for communication can be materialized using such a cable as a LAN cable or a RS-232 cable, for instance.

Likewise, another channel of base station 2 (112), repeaters 13 (113), 23 (114), 14 and 24 and terminal station 2 is also illustrated for reference in Fig. 1.

Communication between the base station 1 (102) and the terminal station is carried out using two routes. One of the routes includes base station 1 (102), repeater 11 (103), repeater 21 (104) and terminal station 1 (105) and the other includes the base station, repeater 12 (107), repeater 22 (108) and the terminal station. Communication is carried out using the two routes because when executing communication by transmitting communication frames of the same data through the two routes, the communication can keeps continuing even in the event that communication through one of the two routes is interrupted. One route is illustrated in Fig. 1 as having two repeaters but the number of repeaters is in no way limited to two.

### < Internal Construction of Radio Communication Station >

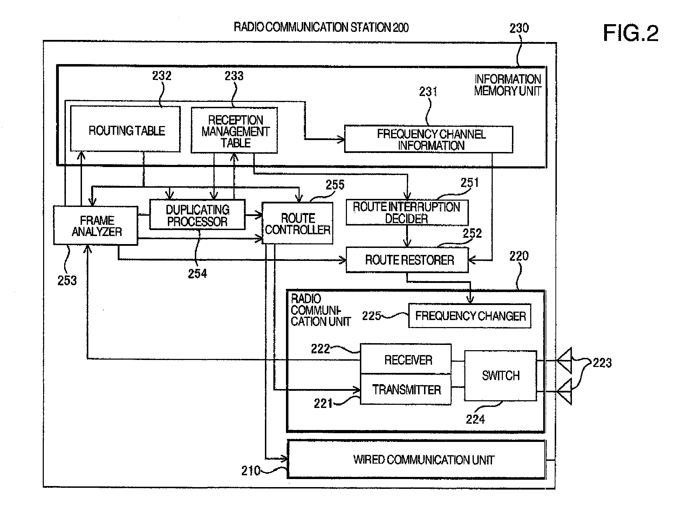

The internal construction of the radio station used in the present network will be described with reference to Fig. 2.

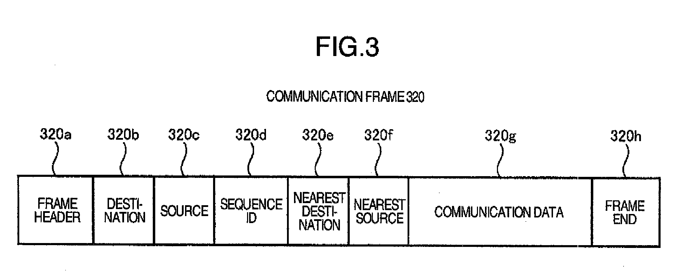

Figs. 3 to 9 will also be referred to as necessary. As illustrated in the network configuration of Fig. 1, the radio station is sorted to plural kinds of base station, repeater and terminal station according to its role but any kind of radio station can be materialized having the same construction.

A radio communication station 200 includes a wired communication unit 210, a radio communication unit 220, an information memory unit 230 and other functors.

The wired communication unit 210 is used in the base station or the terminal station connected by wire as shown in Fig. 1 so as to perform transmission and reception to/from the radio station using the wire. The radio communication unit 220 includes a transmitter 221 for transmission of communication frames, a receiver 222 for reception of communication frames, antennas 223, a switch 224 for executing switchover between connection of transmitter 221 to antennas 223 and connection of receiver 222 to antennas 223.

The two antennas are provided because when communication with different two radio stations is carried out for the purpose of suppressing electric wave interference during radio communication, transmission and reception is executed by using different communication frequency channels for respective radio stations in charge of communication.

For example, in case the radio stations are remote from each other by a constant distance and so communication is possible by neglecting the electric wave interference during the radio communication, communication between the radio stations each constituting the radio network can be conducted by using a single frequency channel and therefore, a single antenna can be used for the radio communication unit to permit each of the transmitter and receiver to use the same antenna.

The two antennas are provided in Fig. 2 but two or more plural antennas for desired frequency bands used for communications may be provided and a desired number of antennas out of the plural antennas may be used selectively.

A frequency changer 225 also provided for the radio communication unit 220 receives frequency channel information 231, indicative of a request for changing the frequency channel, informed from a route restorer 252 when a route interruption decider 251 detects the occurrence of a route interruption, and changes the frequency channel used for communication.

A frame analyzer 253 analyzes a communication frame received from the receiver 222 of radio communication unit and decides from information of a routing table 232 held by own station whether the station of its own is a radio station from which communication originates, a radio station at which the communication terminates or a radio station adapted for relay.

Illustrated in Fig. 3 is a communication frame used for execution of communication in the multi-hop radio network shown in Fig. 1. The communication frame 320 is formatted having a frame header 320a indicative of the beginning of the communication frame, a transmission destination 320b indicative of an ultimate transmission destination of the communication frame, a transmission source 320c indicative of the initial transmission source in communication of the communication frame, a sequence **ID** 320d indicative of an identifier ID of the communication frame, a field 320e indicative of the nearest transmission destination, a field 320f indicative of the nearest transmission source, a field 320g indicative of communication data and a frame end 320h indicative of the end of communication frame.

The routing table 232 is used to determine, on the basis of the transmission destination 320b indicative of a transmission destination of the communication frame, the transmission source 320c indicative of a transmission source of the communication frame, the field 320e indicative of the nearest transmission destination and the field 320f indicative of the nearest transmission source which are described in the communication frame 320, a radio station representing a destination for which the next transmission is to be done.

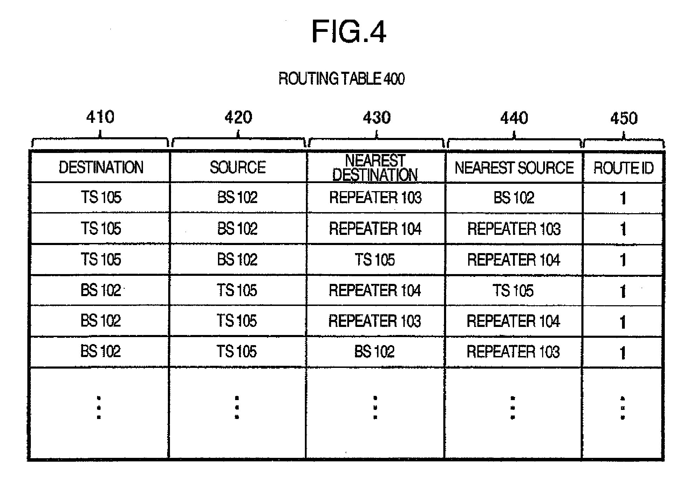

A further description will be given of a routing table as shown in Fig. 4. The routing table designated at 400 has, in combination, pieces of information as shown in Fig. 4 concerning radio stations with which the radio station will possibly communicate and which are sorted in accordance with a transmission destination 410, a transmission source 420, the nearest transmission destination 430, the nearest transmission source 440 and a route ID 450.

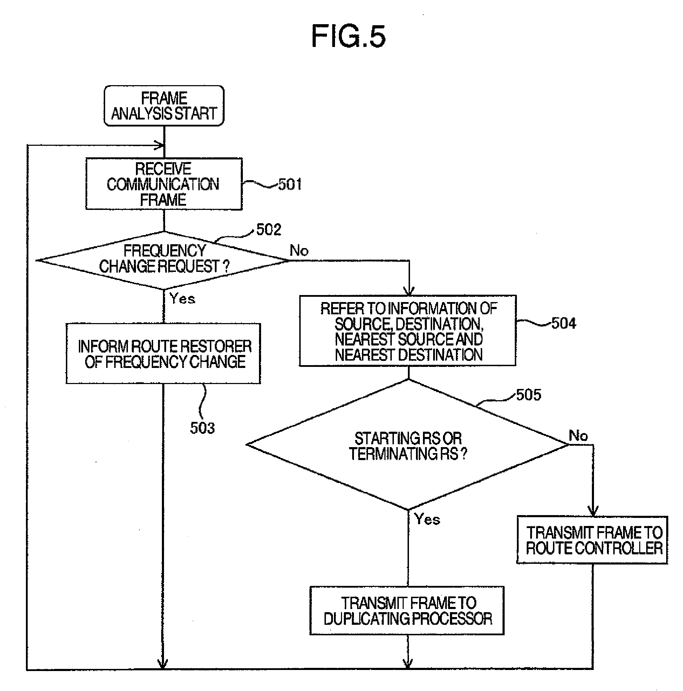

The frame analyzer will be described by making reference to also an operational flow shown in Fig. 5 as necessary. The frame analyzer 253 compares information 320c of a transmission source of a received communication frame with information 320f of the nearest transmission source and compares information 320b of transmission destination with information 320e of the nearest transmission destination to thereby decide at step 505 whether the station of its own corresponds to a radio station (starting RS) of communication origination or a radio station (terminating RS) of communication termination. When the own station is determined to correspond to either radio station, a communication frame is transmitted to a duplicating processor 254 but contrarily, when the station of its own is determined to correspond to a radio station for relaying communication, the communication frame is transmitted as it is to a route controller 255.

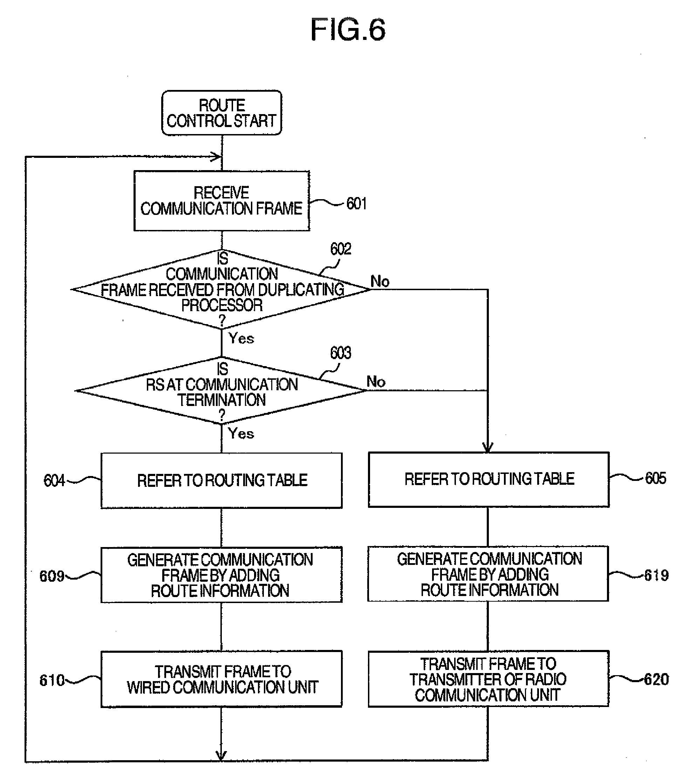

When the own station corresponds to a radio station representing an originator of communication, the duplicating processor 254 duplicates a data field of the transmitted communication frame and transmits duplicated data information to the route controller 255. The route controller will be explained by using an operational flow shown in Fig. 6 as necessary. In the route controller 255, the received data information is added with routing information for two communication routes determined by the information of routing table 232, so that two communication frames can be generated at step 619.

The routing information includes information pieces of communication destination 320b, transmission source 320c, nearest transmission destination 320e and nearest transmission source 320f and besides, frame header 320a, sequence **ID** 320d and frame end 320h. The thus generated two communication frames are sent to the transmitter 221 at step 620.

When the own station otherwise corresponds to a radio station (terminating RS) representing a communication termination, the duplicating processor 254 carries out an intensive process in which later received one of two communication frames having the same data field as that received by the receiver 222 is discarded, and the firstly received communication frame is sent to the route controller 255.

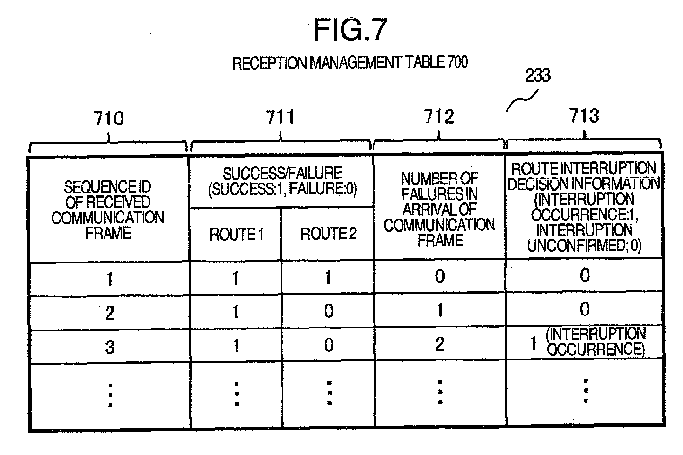

The duplicating processor 254 records a sequence ID of the communication frame the processor has received and reception end information on a reception management table 233 in Fig. 7. If reception of the communication frame having the same sequence ID as that of the received communication frame is recorded on the reception management table 700, the presently received communication frame is discarded.

If the reception management table does not have a record of reception of a communication frame having the same sequence ID as that of the received communication frame, indicating that the presently received communication frame corresponds to an earlier arrived communication frame, routing information is added by means of the route controller 255 to generate a communication frame and thereafter, the thus generated communication frame is sent to the wired communication unit 210 so as to be transmitted to an equipment connected by wire at step 610.

The reception management table 233 is a table adapted for knowing the arrival status of packets and when the own radio station is determined to be a terminating radio station of communication by means of the frame analyzer 253 as described previously, this table is used for making two arriving communication frames of the same sequence **ID** intensive or for making a decision as to route interruption.

As shown in Fig. 7, the reception management table 233 is recorded with sequence **ID** 710 of received packet, success/failure 711 of reception in respective reception routes, a number of failures in arrival of communication packet 712 and route interruption decision information 713.

In a radio station representing a termination of communication in communication using two communication routes, the number of failures in arrival of communication packet 712 is used to make a decision as to whether the communication frame by way of the two communication routes is received normally.

When the communication frame is not received by way of one route or two routes, "1" is added to the failed arrival number in connection with success/failure 711 of reception through each reception route.

For example, the aforementioned communication packet failed arrival number is used in such a manner that when the communication frame of the same sequence **ID** is not received by way of a specified communication route in succession, the communication packet failed arrival number 712 is incremented by one and at the time that the communication frame failed arrival number 712 exceeds a preset constant threshold value (twice in an example of Fig. 7), occurrence of a route interruption is determined.

In this case, as a flag indicative of the occurrence of route interruption, "1" is recorded on the route interruption decision information 713. In this manner, when the communication by way of the specified route is determined as being interrupted and the communication packet failed arrival number exceeds the threshold value, the interruption decision is recorded in the route interruption decision information 713.

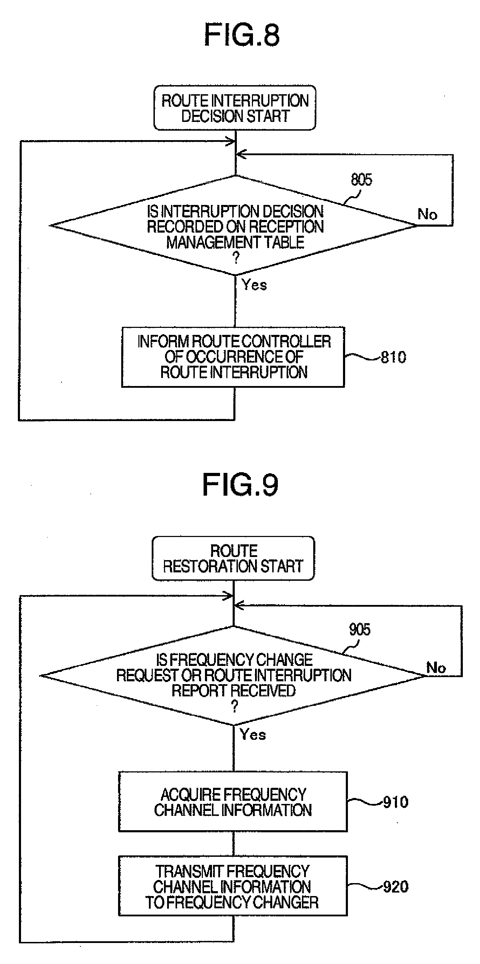

Fig. 8 shows an operational flow of route interruption decider 251. It is checked whether the interruption occurrence is recorded in the route interruption decision information 713 at step 805. If recorded, the route interruption decider 251 informs the route restorer 252 of the occurrence of interruption at step 810.

Fig. 9 shows an operational flow of route restorer 252. It is checked whether route restorer 252 receives the frequency change request or route interruption report at step 905. If received, route restorer 252 acquires frequency channel information 231 at step 910 and sends to the frequency changer 225 frequency channel information indicative of information of frequency channel to be changed when the current frequency channel is interrupted and the frequency channel information as a frequency change request at step 920. The frequency channel information 231 is one that describes a frequency channel used when communication is executed with a radio station possibly making connection to the own station.

### < Basic Operation >

A method will be described which is for establishing communication among radio stations after power supplies of the controller 101 and radio station 110 in the previously described multi-hop radio network shown in Fig. 1 have been started up.

The base station 1 (102) acquires frequency channel information from the controller 101 connected through communication wiring and sets two frequency channels to be used. For example, the base station 1 (102) as shown in Fig. 1 sets the use frequency to a frequency channel f1 and a frequency channel f4.

The frequency channel fx referred to herein is an identifier for discriminating individual use frequency channels and x does not indicate the number of usable frequency channels. In Fig. 1, the frequency channel identifier is illustrated as ranging up to f12 but this does not mean that unless a number of use frequency channels of more than 12 is assured, the multi-hop radio network cannot be realized (for example, f1 and f7 may be the same frequency channel).

The repeater 11 (103) and repeater 12 (107) are set to a frequency channel described in frequency channel information held in advance of start up of power supply and operate to send a request signal for communication connection. Since the configuration of the network can be understood before starting up the power supply of radio station, the frequency channel arrangement suitable for the network configuration can be determined in advance and the frequency channel upon start up of power supply can be set while providing the individual radio stations with the frequency chancel information.

Alternatively, all frequency channels used in the multi-hop radio network may be set cyclically and a frequency channel, at which establishment of communication can be confirmed by transmitting a connection request signal, may be used.

If the frequency channel at which a repeater has sent a connection request signal is equal to a frequency channel a base station uses, the base station can receive the connection request signal. The base station compares transmission source information of the received connection request signal with information of the routing table, thereby deciding whether the own station is a companion to be connected to.

With a companion to be connected confirmed in the decision, a connection request permissible signal representing a response to the connection request signal is sent to the repeater. Contrarily, the base station transmits to the repeater a connection request refusal signal representing a rejection response to the connection request signal and registers the transmission source information of the repeater as a connection refusal companion, so that a communication frame received again from the repeater can be discarded.

The information of transmission source can be materialized by, for example, identifiers of communication stations in various communication standards such as MAC address and IP address. By receiving the connection request permissible signal, the repeater completes the establishment of connection with the base station.

Since, in the communication between the repeater 11 (103) and the repeater 21 (104), the frequency used by an antenna on the terminal station side of repeater 11 (103) and the frequency used by an antenna on the base station side of repeater 21 (104) are set to f2, the communication between repeater 11 (103) and repeater 21 (104) can be established when, as described previously, the repeater 11 (103) transmits the connection request permissible signal for the connection request signal received from the repeater 21 (104) to the repeater 21 (104).

Following the establishment of communication in the hop, communication between the repeater 21 (104) and the terminal station 1 (105) will subsequently be set up according to the previously described method.

Also, in the other communication route of two route communication including base station 1 (102), repeater 12 (107), repeater 22 (108) and terminal station 1 (105), a communication route can be established through the aforementioned method, thus enabling the communication routes in the multi-hop radio network to be set up.

After the establishment of the communication routes, data communication between the base station and the terminal station starts. The base station 1 (102) receives from the controller the communication data to be transmitted to the terminal station 1 (105) and transmits the received transmission data to the terminal station 1 (105). Two communication frames to be transmitted by using two communication routes, respectively, are generated, sent and transmitted while being relayed through the individual repeaters in the respective communication routes and thereafter, the communication frame arriving earlier at the terminal station is held and the other is discarded, thus permitting the terminal station to receive the desired communication data.

Then, when the terminal station 1 (105) receives, from a field apparatus 106, sensor information destined for the controller, data communication is carried out from the terminal station 1 (105) to the base station 1 (102) by using two communication routes and the base station 1 (102) makes the communication frames intensive, thus permitting desired communication data to be received.

In the event that an interruption of a communication route takes place after data communication has started as described above, the interrupted communication route can be restored through a method described below, according to which the interruption of the communication route is detected and the communication route is switched over to a communication route different from the communication route which has been used for the communication.

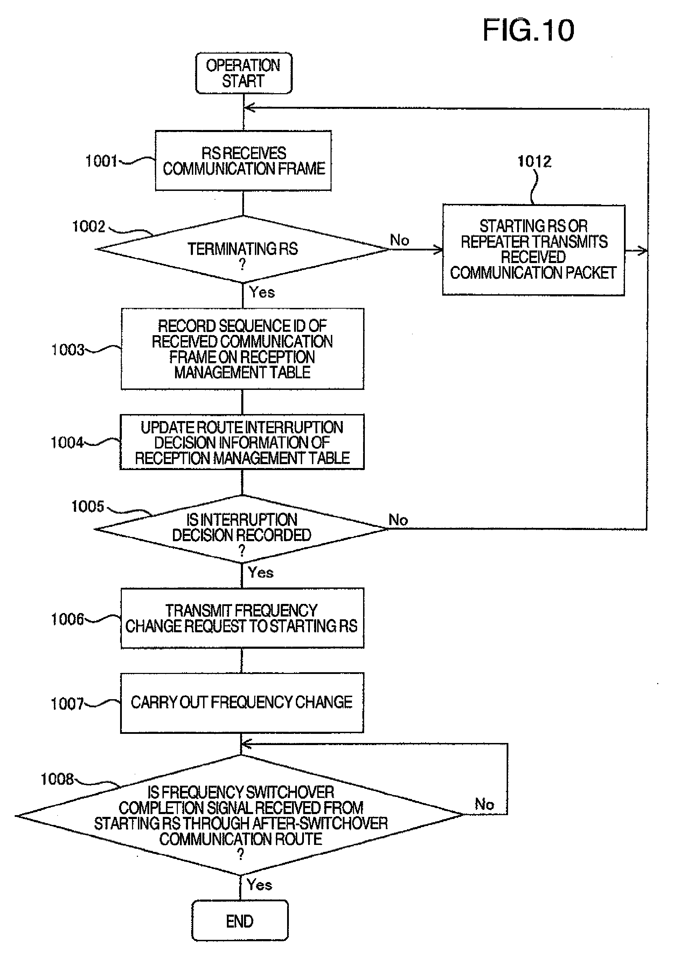

Referring to Fig. 10, the whole radio station operates in accordance with an operational flowchart illustrated therein in the event that an interruption of communication takes place in one of the communication routes after start of data communication. In Fig. 10, when the radio station receives a communication packet at step 1001, it is decided whether the own station is a terminal radio station for the communication at step 1002.

A decision as to whether the radio station is a terminal radio station is made by means of the frame analyzer 253 shown in Fig. 2. If the own station is not determined as to be a communication terminal station, indicating that the own station is a radio station representing either a communication originator or a repeater and in any case, the received communication packet is sent to the transmitter in accordance with a process the route controller of the own station executes at step 1012.

Contrarily, the own station is a radio station at which the present communication terminates and therefore, in accordance with a process the duplicating processor of the own station executes, a sequence ID of the received communication frame is recorded on the reception management table. As a result, the route interruption decision information is updated in the reception management table at step 1004.

Subsequently, by supervisory in the route interruption decider of the own station, an interruption decision is made as to whether the interruption occurrence is recorded on the route interruption decision information in the reception management table at step 1005. When it is confirmed that the interruption occurrence is not recorded on the updated route interruption decision information in the reception management table, a communication packet is again waited for. If a record of interruption occurrence is confirmed from the updated route interruption decision information, the program proceeds to a route switchover operation based on changing the communication frequency.

By consulting the reception management table, a radio station subject to such determination that the own station is a terminal station of the communication can know which one of the two communication routes the interruption is detected on.

By using a method of elimination, the particular radio station can also know the communication route on which the communication is not interrupted and therefore, by using the communication route unaffected by the interruption, it sends a frequency change request to the radio station representing an originator of communication at step 1006. After transmission of the frequency change request, the particular radio station carries out changing the frequency of own station at step 1007. The frequency changing process is started by the route restorer the own station holds.

By consulting frequency channel information described with information concerning frequency channels to which the used frequency channel is to be changed upon interruption, the route restorer sends frequency channel information indicative of changeable frequency channel information to the frequency changer inside the radio communication unit. The frequency changer in receipt of the information of frequency channel changes the communication frequency channel which has been used for the communication with the radio station belonging to the interrupted communication route.

By making reference to Fig. 1, in case an interruption of communication takes place on, for example, a communication route of base station 1 (102), repeater 12 (107), repeater 22 (108) and terminal station 1 (105) which has been used for communication between the base station 1 (102) and the terminal station 1 (105), the frequency channel f 4 used by the base station 1 (102) is changed to f 7 and the frequency channel f 6 used by the terminal station 1 (105) is changed to f 9 so that the communication route may be switched over to a communication route of base station 1 (102), repeater 13 (113), repeater 23 (114) and terminal station 1 (105).

Since the communication path is changed by the route switchover, the radio station representing the communication termination distributes a new routing table and then, to ensure that the execution of the switchover of the communication route can be confirmed on the basis of reception of the routing table, the radio station representing the communication originator keeps continuing, at a constant period, transmission of the new routing table meaning a frequency switchover completion signal until the radio station representing the communication termination makes a reception response after completion of the frequency switchover.

When the radio station representing the communication termination receives the routing table playing the role of the frequency switchover completion signal, the operation for switching over the route undergoing the communication interruption ends (1008).

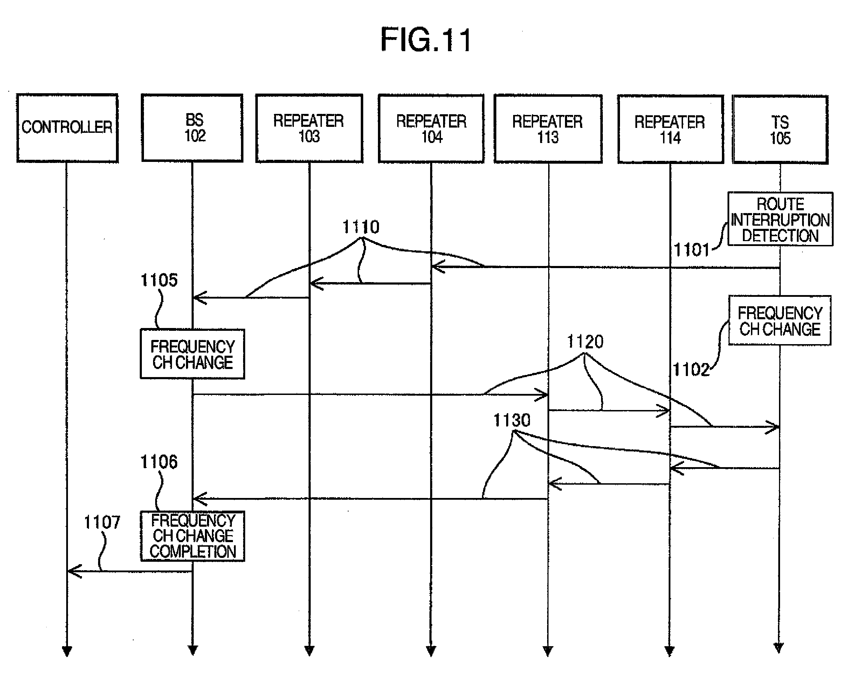

Reference is now made to Fig. 11 illustrating a sequence diagram when the restoration operation explained in connection with Fig. 10 is carried out using the multi-hop radio network of Fig. 1. Illustrated in Fig. 11 is an instance where communication between the base station 1 (102) and the terminal station 1 (105) is carried out by using two communication routes of base station 1 (102), repeater 11 (103), repeater 21 (104) and terminal station 1 (105) and of base station 1 (102), repeater 12 (107), repeater 22 (108) and terminal station 1 (105), respectively, in Fig. 1 and during transmission of a communication frame from the base station 1 (102) to the terminal station 1 (105), an interruption of communication occurs in the communication route to which the repeaters 12 (107) and 22 (108) belong.

The terminal station 1 (105) representing the radio station at the termination of the communication detects the occurrence of an interruption on the route by means of the route interruption decider included in the own station at 1101,and transmits a frequency change request 1110 by using the communication route on which no communication interruption occurs including the base station 1 (102), repeater 11 (103), repeater 21 (104) and terminal station 1 (105).

Then, the terminal station 1 (105) reports the occurrence of route interruption to the base station 1 (102) representing the radio station of communication originator. Thereafter, the terminal station 1 (105) changes the communication frequency the own station has used for communication with the radio station belonging to the communication route undergoing the communication interruption at 1102.

After having changed (1102) the frequency channel, the terminal station 1 (105) representing the communication terminal awaits a frequency switchover completion signal 1120 to be transmitted as a result of the change of frequency channel the radio station representing the originator of the communication has executed.

On the other hand, the base station 1 (102) in receipt of the frequency change request 1110 causes the route restorer of the own station to change the frequency channel from the frequency channel used for the communication with the repeater 12 (107) representing the radio station belonging to the communication route undergoing the communication interruption to a frequency channel by consulting frequency channel information the own station holds at 1105.

Subsequently, in order to transmit a report of completion of frequency channel change playing the role of a new routing table in the network after the route switchover, a frequency switchover completion signal 1120 is sent to the terminal station representing the radio station at communication termination.

The terminal station 1 (105) representing the radio station at termination of the communication in receipt of the frequency switchover completion signal 1120 transmits a frequency switchover completion confirmation signal 1130 to the base station 1 (102) representing the radio station of communication originator. By confirming reception of the frequency switchover completion confirmation signal 1130 transmitted from the terminal station 1 (105), the base station 1 (102) confirms the completion of the route switchover at 1106.

### < Maintenance of Frequency Channel Information after Route Switchover >

In the manner as above, the frequency channel information the radio station uses is changed and the switchover of communication route is carried out. But, there is a possibility that the frequency channel information the radio station holds will not meet the latest frequency channel usage status.

Accordingly, the latest frequency channel information to be managed needs to be updated by the controller which exercises general control of the radio station.

The radio station representing the originator of the communication combines the frequency channel information changed by the terminal station and the frequency channel information changed by the own station to prepare frequency channel change information and transmits it, as the frequency change information, to the controller at 1107 in Fig. 11. The controller in receipt of the thus transmitted information revises change points of the frequency channel information for the radio stations the own controller manages, thus updating (not shown) the frequency channel information.

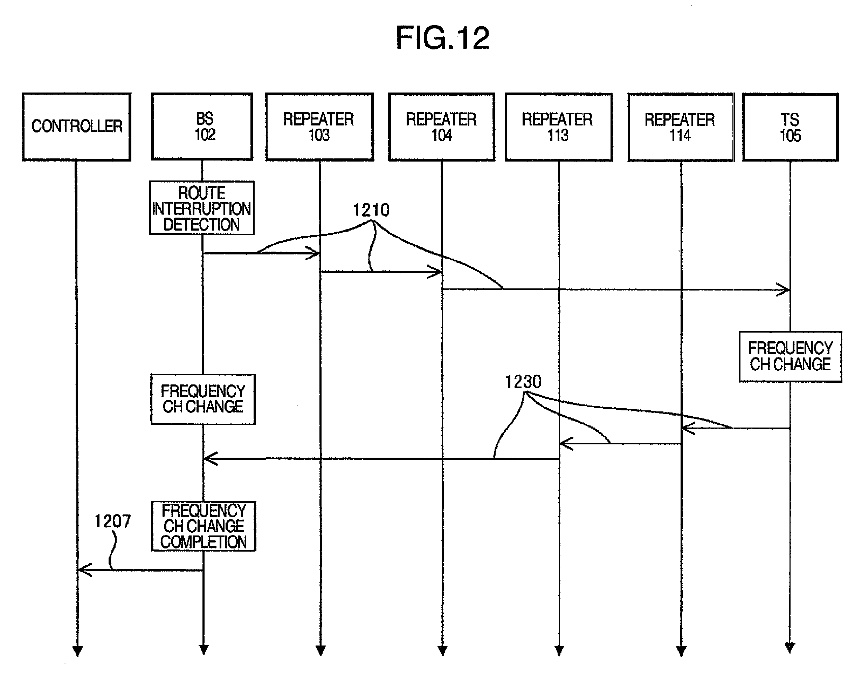

Referring now to Fig. 12, there is illustrated an operational flow showing the route switchover operation effected when the communication station representing an originator of data communication is the terminal station 1 (105) and the communication station representing a termination is the base station. After reporting the route interruption, the base station 1 (102) reports a routing table 1210 indicative of a request for switchover of the frequency channel, changes the frequency channel of the own station and waits for a response 1230 to the frequency switchover request from the terminal station 1 (105).

On the other hand, the terminal station 1 (105) in receipt of the frequency switchover request 1210 from the base station 1 (102) transmits the response 1230 to frequency switchover request to the base station 1 (102). By receiving the frequency switchover request response 1230 from the terminal station 1 (105), the base station 1 (102) can confirm that a frequency switchover process in the radio station representing the communication originator and a frequency switchover process in the radio station representing the termination can be carried out safely and, the frequency switchover process ends.

Subsequently, the base station 1 (102) informs the controller of change information 1207 of the frequency used in the base station 1 (102) and terminal station 1 (105). The controller in receipt of the change information 1207 of use frequency revises, with the aim of updating the frequency channel information held by the own station to the latest one, the particular frequency channel information of base station 1 (102) and terminal station 1 (105) in the frequency channel information.

### < Data Transfer by Another Base Station >

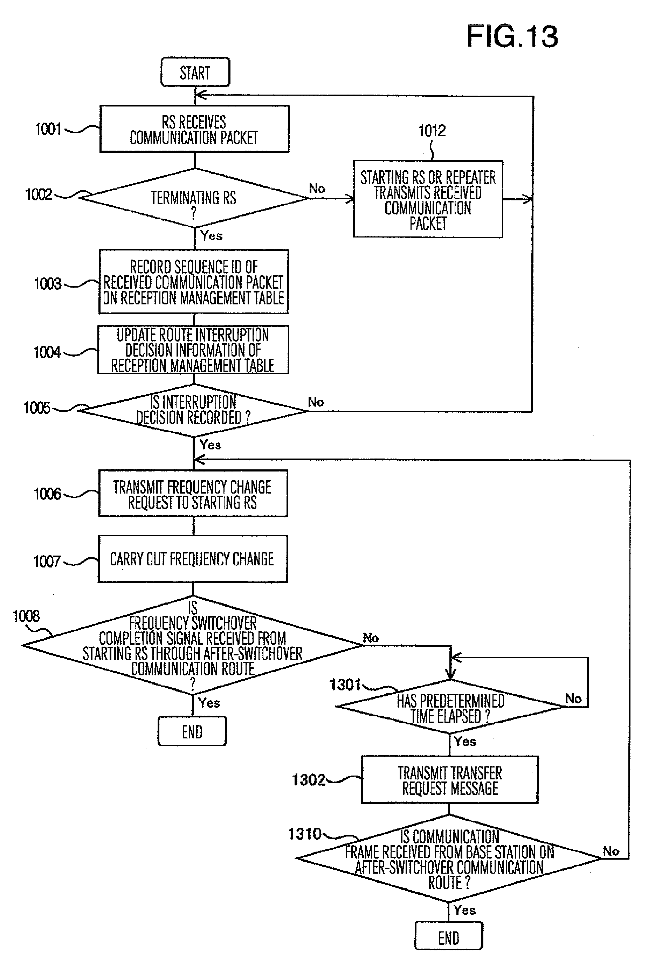

By making reference to an operational flowchart shown in Fig. 13, a route switchover method for restoration of two-route communication will be described, according to which in case the connection between the base station and the repeater belonging to the substitutive route has not been ended at the termination of a constant time but the connection between the repeater belonging to the substitutive route and the terminal station has been ended in the aforementioned route switchover method, a communication hop between the base station and the repeater both belonging to the substitutive route is used in place of the communication between the base station and the repeater which belongs to the substitutive route so that substitutive transfer may be carried out from the base station belonging to the substitutive route to a desired base station.

At step 1301 in the Fig. 13 operational flowchart, a period of time is awaited over which a communication frame is received, by way of the switchover objective communication route, from the radio station representing the communication originator. Conceivably, however, the frequency switchover in the base station and the repeater in the substitution objective route will not succeed if the reception does not proceed even when the constant time has elapsed.

If, in such an event, the frequency switchover succeeds between the terminal station and the repeater in the substitution objective route, two-route communication can be restored by sending at step 1302, a transfer request message to the repeater on substitution objective route to cause the repeater on the substitution objective route to recognize that the own station is a transfer communication path, thus establishing a communication path starting from the repeater on the substitution objective route and reaching the base station of a desired communication route by way of the base station on the substitution objective route.

If reception of the communication frame from the substitution objective route cannot be confirmed even when a transfer request message is reported to the repeater, occurrence of a communication fault on the substitution objective route will be thought of and therefore, the frequency change request is retransmitted to the radio station representing the communication originator so as to retry the route switchover at step 1310.

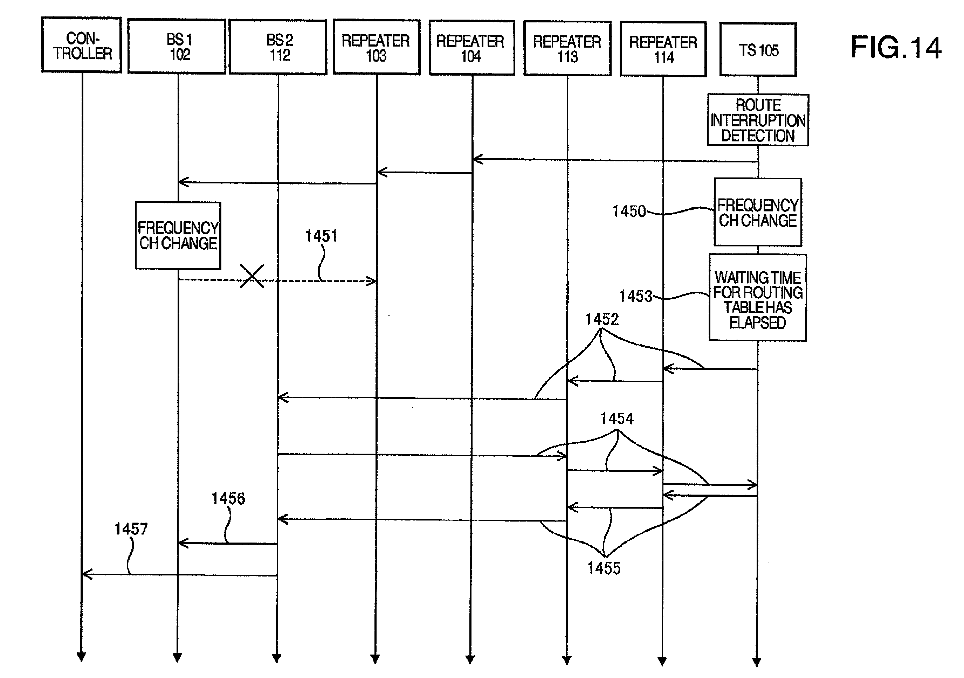

Details of the aforementioned communication operation will be explained with reference to Fig. 14. When confirming that the routing table is not distributed at 1453 even after a lapse of constant waiting time following the execution of frequency switchover 1450, the terminal station 1 (105) informs a transfer request message 1500 used at 1452 when the frequency switchover between repeater 103 and base station 102 does not succeed and then by using a communication route recognized as corresponding to the transfer route, distributes the routing table at 1454 and carries out a routing table reception response at 1455.

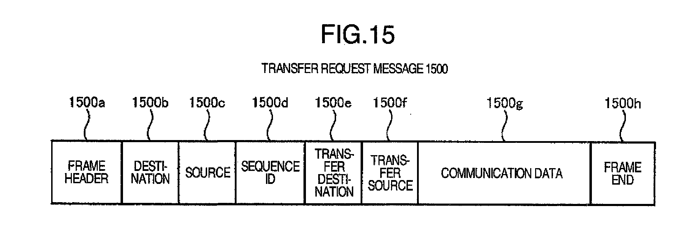

Illustrated in Fig. 15 is a transfer request message 1500. The transfer request message is used to inform a radio station receiving the message that communication will be made with a radio station which is not originally on a communication route of own station.

The terminal station 1 (105) is constructed as detecting a route interruption in the foregoing description but in an alternative construction, the individual repeaters 11 (103), 12 (107), 21 (104) and 22 (108), for example, may cooperate with adjacent stations on both sides on the communication route to confirm the occurrence of an abnormality in communication at intervals of every predetermined time (for example, every 2 sec.), ensuring that a route interruption can be detected. In this case, if an acknowledge response cannot be obtained through, for example thrice retries, an abnormality of repeater can be determined.

For example, when the repeater 12 (107) detects a communication route interruption between it and the repeater 22 (108), changing to a route of repeater 12 (107) ― repeater 23 (114)―- terminal station 1 (105) may be determined.

In this case, the repeater 12 (107) changes the frequency to f 8. On the other hand, command information is transmitted to the terminal station 1 (105) for commanding it to change a communication companion of terminal station 1 (105) from repeater 22 (108) to repeater 23 (114) through base station 1 (102)― repeater 11 (103) - repeater 21 (104) ― terminal station 1 (105) and to change the frequency to f 9. Responsive to the command information, the terminal station 1 (105) changes the communication frequency.

The command information for commanding the terminal station 1 (105) to change the communication frequency may be prepared by the repeater 12 (107) and transmitted or the repeater 12 (107) may transmit information indicative of the occurrence of a route interruption between it and repeater 22 (108) to the controller 101 through the base station 1 (102) and the controller 101 may generate, on the basis of the received information, command information which in turn is transmitted through the base station 1 (102).

Then, the information concerning the changed communication frequency may be transmitted to a specified radio station, for example, a base station in which pieces of information concerning communication frequencies used among individual communication stations may be made intensive. The reason for this is that if the changed communication frequencies duplicate communication frequencies used in the neighbor, there is a possibility that communication will suffer from interference. On the basis of the communication frequency information made intensive, allotment of the communication frequency can be optimized. In other words, when individual radio stations, for example, change frequencies, less interactive communication frequencies can be selected by paying attention to duplication of the circumference communication frequencies.

Then, in case the repeater 12 (107) detects a communication route interruption between it and the repeater 22 (108), the frequency channel between repeaters 12 (107) and 22 (108) may be switched from frequency channel f 2 to another frequency channel in order that the communication between the repeaters 12 (107) and 22 (108) can continue. As will be seen from above, the route switchover (or also termed changing the radio communication route or the like) is stipulated as being a concept which implies not only changing the repeater but also keeping the repeater intact and switching the frequency channel of the repeater remaining unchanged.

The radio station receiving the transfer request message newly adds routing information to the routing table the own station holds to thereby ensure that the communication frame received from the transfer source 1500f described in the transfer request message 1500 can be routed to the transfer destination 1500e. Then, the base station 112 in receipt of the routing table reception response transfers a routing table reception response 1456 to the base station 1 (102) representing an original companion the terminal station 1 (105) will communicate with.

When the base station 112 transfers the routing table reception response 1457 also to the controller, the controller can recognize that one of the communication routes from the terminal station 1 (105) to the base station 1 (102) has been replaced with a communication route of terminal station 1 (105), repeater 23 (114), repeater 13 (113), base station 2 (112), radio communication unit and base station 1 (102), thus making it possible to keep the data communication using the two communication routes continuing.

In the route switchover in communication between two different radio stations, a plurality of radio stations adapted to relay the communication and a plurality of communication routes constituted by the aforementioned two radio stations are used, and communication frames having the same data field are sent to the plural routes, respectively, to thereby carry out multiplexed multi-hop communication for executing data communications in parallel.

As has been described, in the present embodiment, an interruption of communication is detected at a radio station representing a terminal of the communication and by using a communication route not undergoing the interruption, interruption information is reported to a radio station representing an originator of the communication. The radio stations representing the communication originator and the communication terminator, respectively, and detecting the occurrence of interruption operate to change the frequency used for communication with the radio station constituting the communication route subject to the communication interruption, thereby performing route switchover to a communication route different from the communication route which has been in use for the data communication.

In this manner, when an interruption of communication route occurs in the multi-hop radio network adapted to execute two-route redundant communication for the purpose of assuring the reliability of communication, a communication interruption report also playing the role of a frequency switchover request for route switchover is sent through a definitely determined communication route to thereby switch over the route, so that the time to switch over the route can be estimated easily and the route can be switched while maintaining the real time property adapted for completion of a process within a constant time.

## Claims

1. A radio communication system comprising:
a first node (102);
a second node (105);
a first radio communication route having relay nodes (103, 104) and through which communication is executed between said first and second nodes; and
a second radio communication route having, at least partly, relay nodes (107, 108) different from these of said first radio communication route and through which communication is executed,
wherein when a communication abnormality occurs in one of said first and second radio communication routes, first command information for changing at least part of said radio communication routes is supplied from one of said first and second nodes which are disposed on opposite sides of a spot of the communication abnormality so that information concerning the route change may be transmitted to the other of said first and second nodes by way of the other radio communication route and, on the basis of the information concerning the route change, second command information complying with the change of radio communication route is supplied from the other of said first and second nodes.

2. A radio communication system according to claim 1, wherein the first command information is generated in one of said first and second nodes, and the second command information is generated in the other of said first and second nodes.

3. A radio communication system according to claim 2, wherein the first command information is for commanding one of said first and second nodes to communicate with a relay node different from a relay node constituting the radio communication route on which the communication abnormality occurs, the second command information is for commanding the other of said first and second nodes to communicate with the relay node different from the relay node constituting the radio communication route on which the communication abnormality occurs.

4. A radio communication system according to claim 1, wherein a radio communication route after changing has been predetermined in advance and when the communication abnormality occurs, said first command information and said second command information are generated so that said predetermined radio communication route may be set up.

5. A radio communication system according to claim 4 further comprising a routing table (232) for prescribing a node participating next in the radio transmission in respect of individual relay nodes, wherein when changing the relay route, information (400) in said routing table (232) and indicative of a node for performing radio transmission next to a predetermined relay node is changed.

6. A radio communication system according to claim 4, wherein said relay node is so constructed as to be able to communicate by selecting a specified frequency from a plurality of radio frequencies (fx) and the first and second command information is information for commanding a predetermined relay node to change the frequency.

7. A radio communication system according to claim 1, wherein when pieces of data are transmitted to both of said first and second routes and when either one piece of data is not received, the relay route change is carried out.

8. A radio communication system according to claim 7, wherein said data is transmitted from said first node, said second node receives said data, and said second node decides the communication abnormality and transmits said second command information to said first node.

9. A radio communication system according to claim 8 further comprising a routing table (232) containing said frequency and adapted for management of said route, wherein when said relay node is changed, said routing table is rewritten.

10. A radio communication system according to claim 1 further comprising a plurality of base stations (102, 112) connected to a controller (101), wherein each of said base stations is able to communicate with a corresponding terminal station (105) through a plurality of radio communication routes and when the communication abnormality occurs, communication with the corresponding terminal station is carried out through a different base station.

11. A radio communication apparatus for controlling faults of a radio communication system having a first node (102), a second node (105), a first radio communication route having relay nodes (103, 104) and through which communication is executed between said first and second nodes, and a second radio communication route having, at least partly, relay nodes (107, 108) different from those of said first radio communication route and through which communication is executed,
wherein when a communication abnormality occurs in one of said first and second radio communication routes, first command information for changing said at least part of said radio communication is supplied from one of said first and second nodes which are disposed on opposite side of a spot of the communication abnormality so that information concerning the route change may be transmitted to the other of said first and second nodes by way of the other communication route and second command information complying with the change of radio communication route may be supplied from the other of said first and second nodes.

12. A radio communication method for controlling communication between a first node (102) and a second node (105) through a first radio communication route and controlling communication through a second communication route having, at least partly, a relay node different from that of said first radio communication,
wherein when a communication abnormality occurs in one of said first and second radio communication routes, first command information for changing said at least part of said radio communication is supplied from one of said first and second nodes which are disposed on opposite side of a spot of the communication abnormality so that information concerning the route change may be transmitted to the other of said first and second nodes by way of the other communication route and second command information complying with the change of radio communication route may be supplied from the other of said first and second nodes.
